Europäisches Patentamt

European Patent Office

Office européen des brevets

(11) Publication number: **0 083 227**
**B1**

(19)

## (12) EUROPEAN PATENT SPECIFICATION

(45) Date of publication of patent specification: **27.08.86**

(51) Int. Cl.⁴: **B 65 G 65/44,** G 01 G 19/32

(21) Application number: **82306929.9**

(22) Date of filing: **23.12.82**

(54) Combinatorial weighing apparatus.

(30) Priority: **25.12.81 JP 198203/81**

(43) Date of publication of application:
**06.07.83 Bulletin 83/27**

(45) Publication of the grant of the patent:
**27.08.86 Bulletin 86/35**

(84) Designated Contracting States:
**DE FR GB IT**

(56) References cited:
**DE-C- 919 038**
**GB-A- 776 699**
**GB-A-1 280 112**
**GB-A-2 074 329**
**US-A-2 684 148**
**US-A-2 737 289**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Sashiki, Takashi**
**10-46, Babamibashiri**
**Nagaokakyo-shi Kyoto (JP)**

(74) Representative: **Fane, Christopher Robin King et al**
**HASELTINE LAKE & CO. Hazlitt House 28 Southampton Buildings Chancery Lane London, WC2A 1AT (GB)**

Courier Press, Leamington Spa, England.

## Description

The present invention relates to a combinatorial weighing apparatus, and more particularly to a supply device in an automatic combinatorial weighing apparatus of the kind which operates by computing combinations of weight values of batches of articles held respectively in different weighing machines of the apparatus, finding the combination of weight values that gives a total weight equal or closest to a predetermined weight, and discharging the articles from those weighing machines that correspond to the said combination (GB—A—2074329).

Prior distributive supply devices used in such combinatorial weighing apparatus include those employing distributive bowls and those using radial troughs. The weighing apparatus with the distributive bowl or radial troughs is effective enough to perform the function of combining weights or numbers of articles that widely differ with respect to size and shape. However, the conventional weighing device has a tendency to fail to provide correct weight combinations for relatively tiny or minute articles such as dried tea leaves, grain, cornflakes, or the like. More specifically, with the distributive bowl construction, articles are liable to drop through gaps between the discharge ports of guide tracks and shutters disposed at the discharge ports, with the result that the articles will be supplied in an excessive quantity. On the other hand, for example in apparatus such as that disclosed in GB—A—2074329, articles to be supplied down radially extending distributive troughs may continue to fall from a distribution table even when an electromagnetic vibratory device is de-energized at an arbitrary position. This can cause the articles to be deposited in such a thick layer at the starting ends of the radial troughs that the deposited articles will be spilled over the rear end or side walls of the radial troughs. The deposits as they vary in quantity in the radial troughs are likely to make the supply of articles irregular. The distributive supply devices of the foregoing known types are therefore disadvantageous in that they have a tendency to supply an irregular quantity of articles especially when the articles are small in size. Additional problems with the distributive bowl are that it generates noise when the shutter is opened or closed, and articles suffer from damage due to circulatory motion thereof on the guide tracks.

It is desirable to provide a distributive supply device of high precision for combinatorial weighing apparatus which is capable of preventing relatively minute articles from falling off.

It is also desirable to provide a distributive supply device for combinatorial weighing apparatus which allows articles to be deposited in radial troughs to a constant height for stably supplying articles from the radial troughs.

It is further desirable to provide a distributive supply device for combinatorial weighing apparatus which incorporates a distributive bowl capable of selectively supplying batches of articles without opening and closing shutters, and hence with low noise, thereby avoiding damage to articles being supplied and weighed.

According to the present invention there is provided a combinatorial weighing apparatus, of the kind which operates by computing combinations of weight values of batches of articles held respectively in different weighing machines of the apparatus, finding the combination of weight values that gives a total weight equal or closest to a predetermined weight, and discharging the articles from those weighing machines that correspond to the said combination, which apparatus includes a distributive supply device, coupled to a vibration generator which subjects the device to rotary vibration when the apparatus is in use, for distributing articles to a plurality of batch receptacles associated with respective different weighing machines of the apparatus, characterised in that the supply device comprises a supply container provided with a plurality of tubular outlet chutes leading from the supply container at respective substantially peripheral outlet points thereof and arranged to discharge respectively into the said receptacles.

US—A—2684148 discloses a supply device having a linear main feeder trough provided with outlet slots through which material is discharged via spouts into respective further linear vibratory feeders. These further linear feeders are used simply to fill respective weighing pans up to a preselected batch weight. There is no suggestion or indication that such an arrangement could be usefully applied to a rotary supply device such as the present invention is concerned with, and in particular there is no mention of any combinatorial weighing apparatus of the aforesaid kind, and the particular problems associated therewith, and accordingly no indication that any particular features of the prior arrangement would be of real value in ensuring a sufficiently accurate and regularly controlled distribution of articles to a relatively large number of weighing machines such as can normally be found in an embodiment of the present invention.

Reference will now be made, by way of example, to the accompanying drawings in which:

Fig. 1(A) shows a plan view of a conventional distributive device incorporating a distributive bowl;

Fig. 1(B) shows a cross-sectional view taken along line A—A of Fig. 1(A);

Fig. 2(A) shows a plan view of a conventional distributive device having radial troughs;

Fig. 2(B) shows a front elevational view of the distributive device shown in Fig. 2(B);

Fig. 3(A) shows a plan view of a distributive device, as used in an embodiment of the present invention, having radial troughs;

Fig. 3(B) shows a cross-sectional view taken along line B—B of Fig. 3(A);

Fig. 4 shows a plan view of a distributive device, as used in an embodiment of the invention, incorporating a distributive bowl;

Fig. 5 shows a vertical cross-sectional view of a distributive device, as used in another embodiment of the invention, which utilizes a distributive bowl; and

Figs. 6(A) and 6(B) show vertical axial-sectional views of distributive bowls used in further embodiments of the present invention.

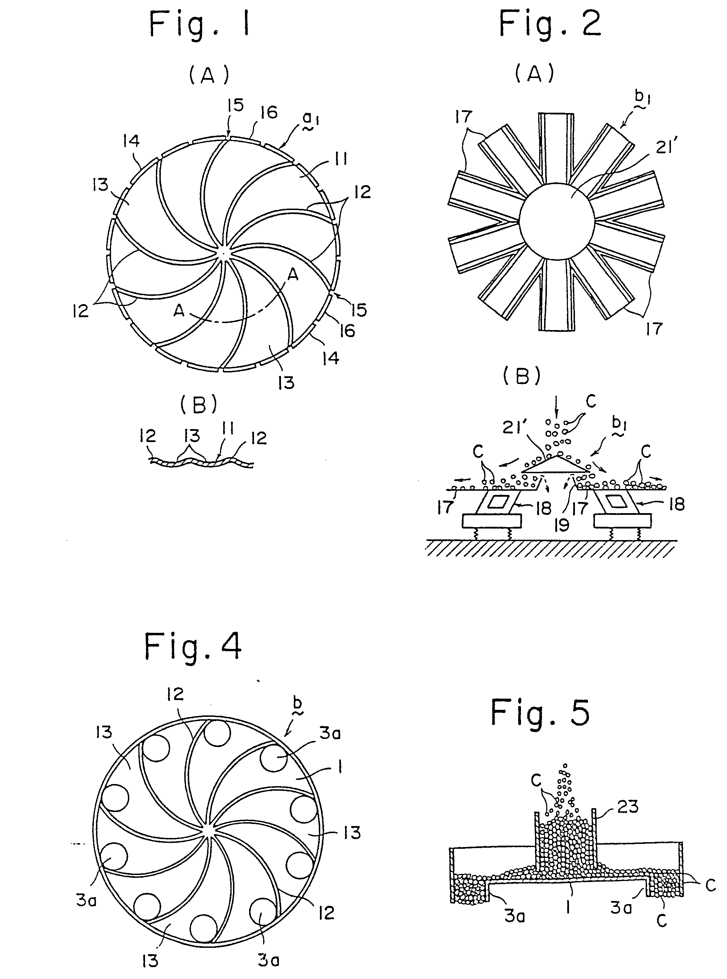

Figs. 1(A) and 1(B) illustrate a conventional distributive supply device $a_1$ incorporating a distributive bowl for use in a combinatorial weighing apparatus. The distributive supply device $a_1$ comprises a circular distributive bowl 11 having a plurality of spiral ridges 12 extending radially outwardly from the center of the bowl toward an outer peripheral edge thereof. The ridges 12 define therebetween concavities serving as guide tracks 13 which are substantially arcuate in cross section, as shown in Fig. 1(B) and diverge progressively toward their radially outward discharge ends. An outer wall 14, which is separate from the distributive bowl 11, is located at the discharge ends of the guide tracks 13 and has recesses 15 in which shutters 16 are disposed respectively in the discharge ends of the guide tracks. In operation, a multiplicity of articles are divided and placed onto the guide tracks 13 while the distributive bowl 11 is being vibrated in reciprocatory spiral motions which are a combination of reciprocatory rotational motions and up-and-down motions. Due to centrifugal forces resulting from such reciprocatory spiral motions, the articles in the guide tracks 13 progressively move radially outwardly down the guide tracks 13 toward their discharge ends. At this time, only the shutters 16 at the discharge ends of those guide tracks 13 which give a desired weight or number combinations are opened under a command issued from weighing hoppers (not shown) to thereby discharge the articles into a container (not shown). During this time, the articles on the guide tracks 13 with their shutters 16 closed are subjected to circulatory motion in the circumferential direction respectively on the guide tracks 13. The distributive bowl of the known arrangement is effective in sorting out and supplying batches of articles to a nicety. However, where the articles to be supplied are of relatively fine size such as dried tea leaves, grain or the like, they tend to fall through gaps between the shutters and the guide tracks, with the consequence that an undue quantity of articles needs to be supplied and an unreliable distributive supply of articles will sometimes result. Additional problems with the distributive bowl are that it generates noise when the shutter is opened or closed, and articles suffer from damage due to circulatory motion thereof on the guide tracks.

Figs. 2(A) and 2(B) are illustrative of a conventional distributive device $b_1$ having radial troughs for use in a combinatorial weighing apparatus. The distributive device $b_1$ comprises a conical distributive bowl 21' and a plurality of radial troughs 17 extending radially outwardly from the conical distributive bowl 21'. Each of the radial troughs 17 can be vibrated by a corresponding radial feeder 18 as illustrated in Fig. 2(B) to cause articles c to move from the conical distributive bowl 21' progressively down the radial troughs 17 toward their discharge ports due to the vibratory action. Selective supply of the articles on the radial troughs is effected by turning on and off the radial feeders 18 under a command from weighing hoppers (not shown). Accordingly, the radial troughs are free from shutter noise and article dropping which would be experienced with the distributive bowl, and the distributive bowl does not undergo damage which would otherwise result from circulatory motion of articles in a long period of time. The known radial troughs however are disadvantageous in that relatively minute articles tend to fall from the distributive bowl 21' even when a radial feeder 18 at any arbitrary position is stopped. The articles are then deposited in thick layers at the starting ends of the radial troughs 17 to the point where the deposited articles c will be spilled over the rear end walls 19 or side walls of the radial troughs. The article deposits as they vary in quantity in the radial troughs are likely to make the supply of articles unstable. The distributive supply devices of the foregoing known types are therefore disadvantageous in that they have a tendency to supply an unstable quantity of articles especially when the articles are small in size.

Figs. 3(A) and 3(B) show a distributive supply device a, incorporating radial troughs, for use in apparatus embodying the present invention. The distributive supply device a comprises in combination a distributive bowl 21 and receptacles in the form of radial troughs 7. The bowl 21 in is in the form of a circular or substantially circular plate which lies horizontally and has an outer circumferential wall and a plurality of tubular chutes 3 of a small diameter disposed radially inwardly of the outer circumferential wall and projecting downwardly from the circular plate, the tubular chutes 3 having lower open ends 3'. As shown in Fig. 3(B), each radial trough 7 extends radially with the lower end of one of the tubular chutes 3 of the distributive bowl 21 serving to supply articles to a starting end of the radial trough 7. The radial trough 7 has a rear end wall 19 located radially inwardly of the tubular chute 3 such that the radial trough 7 embraces the tubular chute 3. The tubular chute 3 is therefore surrounded by the rear end wall 19, which is approximately as high as the bottom of the distributive bowl 21, and side walls 20 extending radially outwardly from the rear end wall 19 and having a height progressively reduced, with the lower end 3' of the chute spaced a suitable distance from a bottom plate 7' of the radial trough 7.

The distributive bowl 21 and the radial troughs 7 can be driven respectively by vibration generator 8 and radial feeders 9 which vibrate the radial troughs 7, respectively. More specifically, the distributive bowl 21 is vibratable in reciprocatory spiral motions to enable the articles c to be displaced in circulatory movements from the center of the distributive bowl 21 toward the tubular chutes 3 located at the periphery of the distributive bowl 21. The articles then drop through the tubular chutes 3 toward the rear end portions of the corresponding radial troughs 7. The radial troughs 7 are vibrated back and forth individually to displace the articles progressively from the rear end portions toward discharge ports thereof, from which the articles are supplied to a container such as a pool hopper. Where articles are to be supplied from particular radial troughs in actual distributive supply operation, only those particular radial troughs are actuated for vibratory article feeding.

Since each tubular chute 3 of the distributive bowl 21 has its lower open end 3' spaced from a bottom plate 7' of the associated radial trough 7 ·and is surrounded by the rear end wall 19 and side walls 20 of the radial trough 7, articles $c'$ supplied from the tubular chute 3 for the radial trough 7 which is not driven by the radial feeder 9 tend to be deposited in the rear end portion of the radial trough 7. The articles thus deposited close off the lower open end 3' of the tubular chute 3, and the articles are deposited only up to the height which is substantially equal to the height of the lower open end 3'. Accordingly, articles which are additionally supplied are prevented from entering the tubular chute 3, and are kept moving in circulatory paths on the distributive bowl 21. The quantity of articles $c''$ on the radial trough 7 therefore remains unchanged. When the articles on the inactivated radial trough 7 are requested at a later time, they will be supplied stably and correctly without causing noise which would otherwise be produced due to dropping of the articles.

Fig. 4 shows a distributive supply device $b$, having a distributive bowl, as used in another embodiment of the present invention. The distributive supply device $b$ comprises a circular distributive bowl 1 having a plurality of ridges 32 extending spirally in the radially outward direction and defining a plurality of guide tracks 13. The guide tracks 13 have discharge ports, respectively, where a plurality of tubular chutes 3a of a small diameter are formed on the guide tracks 13, respectively, the tubular chutes 3a having lower open ends spaced a suitable distance from a bottom plate of a container (not shown). Articles as they are supplied through the tubular chutes 3a are liable to become jammed therein, and hence are prevented by the restrictive action of the tubular chutes 3a from being supplied in an excessive quantity. The distributive supply device $b$ does not necessitate the conventional shutters, but nevertheless can sort out and supply batches of articles to a nicety.

According to still another embodiment as shown in Fig. 5, a distributive supply device comprises a distributive bowl 1 and a tubular chute 23 mounted on and located centrally of the distributive bowl 1 and having a lower end spaced a suitable distance from a bottom plate of the distributive bowl 1.

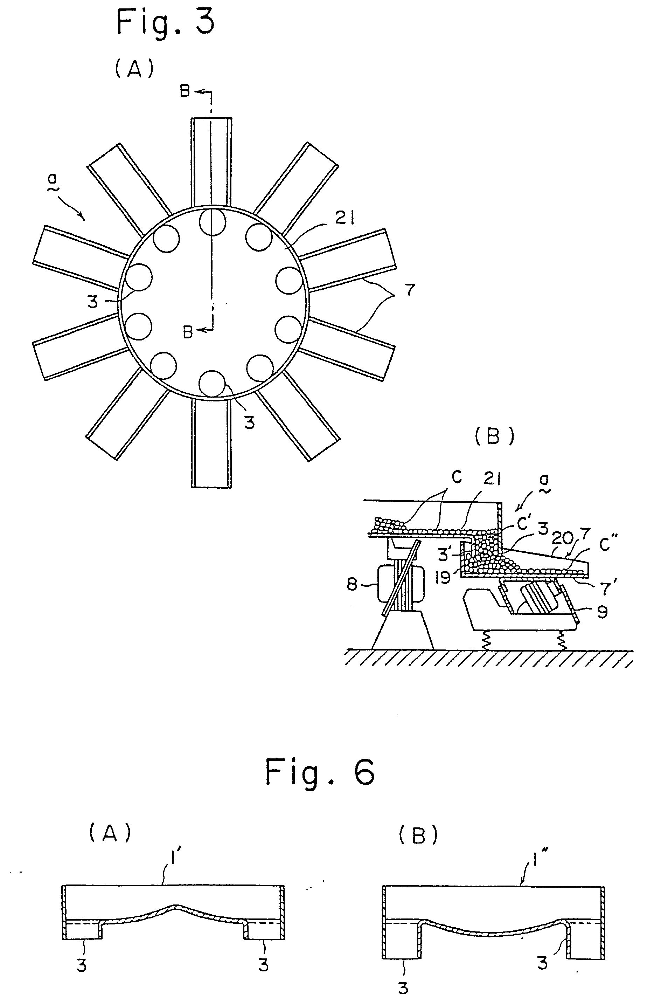

Fig. 6(A) illustrates a distributive supply device according to a still further embodiment. The distributive supply device has a distributive bowl 1' having a central portion raised to provide a downgrade surface extending toward tubular chutes 3 disposed at the peripheral edge portion of the distributive bowl 1'. The downgrade surface allows articles to be displaced easily toward the tubular chutes 3.

Fig. 6(B) shows another distributive supply device according to still another embodiment. The distributive supply device includes a distributive bowl 1'' having a downwardly concave central portion to provide an upgrade surface extending toward tubular chutes 3 at the peripheral margin of the distributive bowl 1''. The upgrade surface serves to retard articles as they move toward the tubular chutes 3, so that the articles will be prevented from being supplied excessively but be fed uniformly in a small quantity.

In an embodiment of the present invention, the distributive supply device of the combinatorial weighing apparatus has tubular chutes disposed at a supply end of a preceding container or distributive bowl and having lower open ends spaced a suitable interval from the lowermost inner boundary of a following container. This construction causes articles while being fed from the preceding to the following container to be jammed in the tubular chutes and hence prevents the articles from being supplied in an excessive quantity, so that the articles can be supplied easily in a controlled quantity and in correctly selected batches which are the most important factor in combinatorial weighing operation.

In the radial trough construction, the tubular chutes are located at the periphery of a distributive bowl immediately above the starting ends of the radial troughs. Articles as they are supplied through the tubular chutes onto the radial troughs are prevented from being spilled over the radial troughs and from changing in the supplied quantity, but can be fed in a desired quantity to a following pool hopper or another container. With the distributive bowl structure, the tubular chutes are mounted on the peripheral margin of the distributive bowl for preventing articles from being excessively supplied from the distributive bowl into a following container.

**Claims**

1. A combinatorial weighing apparatus, of the kind which operates by computing combinations of weight values of batches of articles held respectively in different weighing machines of the apparatus, finding the combination of weight values that gives a total weight equal or closest to a predetermined weight, and discharging the articles from those weighing machines that correspond to the said combination, which apparatus includes a distributive supply device (a, b) coupled to a vibration generator (8) which subjects the device to rotary vibration when the apparatus is in use, for distributing articles (c) to a plurality of batch receptacles (7) associated with respective different weighing machines of the apparatus, characterised in that the supply device comprises a supply container (21, 1) provided with a plurality of tubular outlet chutes (3, 3a) leading from the supply container at respective substantially peripheral outlet points thereof and arranged to discharge respectively into the said receptacles (7).

2. A device as claimed in claim 1, wherein each of the said outlet chutes (3, 3a) has its discharge end spaced a predetermined distance above a substantially horizontally extending lowermost inner boundary of the associated receptacle (7).

3. A device as claimed in claim 1 or 2, wherein said supply container (21, 1) includes an integral peripheral wall extending along an outer peripheral edge of the container, said tubular outlet chutes (3, 3a) being disposed adjacent to said peripheral wall.

4. A device as claimed in claim 1, 2 or 3, including a tubular feed chute (23) for supplying the articles to said supply container (1), the tubular feed chute having its discharge end disposed substantially centrally of the supply container.

5. A device as claimed in any one of claims 1 to 4, wherein each of said receptacles (7) has a rear end wall (19) and a pair of opposed side walls (20) extending therefrom, the associated tubular outlet chute (3, 3a) being partly surrounded by said rear end wall and said side walls.

6. A device as claimed in any preceding claim, wherein said supply container (1') has a lowermost inner boundary having a central portion that projects upwardly with respect to a substantially horizontal portion extending radially therefrom.

7. A device as claimed in any one of claims 1 to 5, wherein said supply container (1'') has a lowermost inner boundary having a central concave portion and a substantially horizontal portion extending radially from the central portion.

**Patentansprüche**

1. Kombinationswaage, die mit der Berechnung von Kombinationen von Gewichtswerten von Artikelpartien arbeitet, welche sich jeweils in verschiedenen Waagen der Anordnung befinden, die die Gewichtswertkombination ermittelt, welche ein einem vorbestimmten Gewicht entsprechendes oder weitestgehend angenähertes Gesamtgewicht wiedergibt und die Artikel von denjenigen Waagen abgibt, welche der Kombination entsprechen, wobei die Anordnung eine verteilende Zuführungsvorrichtung (a, b) aufweist, die an einen Schwingungserzeuger (8) angeschlossen ist, der die Zuführungsvorrichtung in Drehschwingungen versetzt, wenn die Anordnung in Betrieb ist, um auf mehrere Partiesammler (7), denen jeweilige verschiedene Waagen der Anordnung zugeordnet sind, Artikel (c) zu verteilen, dadurch gekennzeichnet, daß die Zuführungsvorrichtung einen Zuführungsbehälter (21, 1) aufweist, der mit mehreren rohrförmigen Auslaßrutschen (3, 3a) versehen ist, die an jeweiligen im wesentlichen umfangsmäßigen Auslaßstellen des Zuführungsbehälters von diesem ausgehen und zum Austrag in die jeweiligen Sammler (7) angeordnet sind.

2. Anordnung nach Anspruch 1, bei der das Austragende jeder Auslaßrutsche (3, 3a) um ein vorgegebenes Abstandsstück über im wesentlichen waagerecht verlaufenden untersten inneren Begrenzung des zugeordneten Sammlers (7) angeordnet ist.

3. Anordnung nach Anspruch 1 oder 2, bei der der Zuführungsbehälter (21, 1) eine integrierte Umfangswand aufweist, die längs eines äußeren Umfangsrandes des Behälters verläuft und bei der die rohrförmigen Auslaßrutschen (3, 3a) bei dieser Umfangswand angeordnet sind.

4. Anordnung nach Anspruch 1, 2 oder 3, mit einem rohrförmigen Beschickungsschacht (23) zur Zuleitung der Artikel zu dem Zuführungsbehälter (1), wobei das Austragende des Beschickungsschachtes im wesentlichen in der Mitte des Zuführungsbehälters angeordnet ist.

5. Anordnung nach einem der Ansprüche 1 bis 4, bei der jeder Sammler (7) eine rückseitige Endwand (19) und zwei von dieser ausgehende einander gegenüberliegende Seitenwände (20) aufweist und wobei die zugeordnete rohrförmige Auslaßrutsche (3, 3a) von der rückseitigen Endwand und den Seitenwänden teilweise umgeben ist.

6. Anordnung nach den vorangegangenen Ansprüchen, bei der der Zuführungsbehälter (1') eine unterste innere Begrenzung mit einem Zentralbereich aufweist, der in bezug auf einen von diesem radial verlaufenden, im wesentlichen waagerechten Bereich nach oben ragt.

7. Anordnung nach einem der Ansprüche 1 bis 5, bei der der Zuführungsbehälter (1'') eine unterste innere Begrenzung mit einem konkaven Mittelbereich und einem im wesentlichen waagerechten Bereich aufweist, der von dem Mittelbereich radial verläuft.

**Revendications**

1. Appareil de pesage combiné du type qui opère en calculant des combinaisons de valeurs en poids de quantités d'articles contenus respectivement dans différentes machines peseuses de l'appareil, en trouvant la combinaison de valeurs en poids qui donne un poids total égal à ou le plus rapproché d'un poids prédéterminé, et en déchargeant les articles provenant des machines peseuses qui correspondent à cette combinaison, cet appareil comprenant un dispositif distributeur d'alimentation (a, b) accouplé à un générateur (8) de vibrations qui soumet le dispositif à des vibrations rotatives lorsque l'appareil est en fonctionnement, afin de distribuer des articles (c) à une pluralité de réceptacles associés (7) à différentes machines peseuses respectives de l'appareil, caractérisé en ce que le dispositif d'alimentation comprend un conteneur (21, 1) d'alimentation doté d'une pluralité de goulottes tubulaires (3, 3a) de sortie du conteneur d'alimentation en des points respectifs, sensiblement périphériques, de sortie du conteneur et disposés de façon à se décharger respectivement dans les réceptacles (7).

2. Appareil suivant la revendication 1, dans lequel chacune des goulottes (3, 3a) de sortie a son extrémité de déchargement placée à une distance prédéterminée au-dessus de la limite intérieure inférieure et sensiblement horizontale du réceptacle associé (7).

3. Appareil suivant l'une des revendications 1 ou 2, dans lequel le conteneur (21, 1) d'alimentation comprend une paroi périphérique qui en fait partie intégrante et qui se prolonge le long du bord extérieur périphérique du conteneur, les goulottes tubulaires (3, 3a) de sortie étant contiguës à cette paroi périphérique.

4. Appareil suivant l'une des revendications 1, 2 ou 3, comprenant une goulotte tubulaire (23) d'alimentation pour amener les articles au conteneur (1) d'alimentation, cette goulotte tubulaire d'alimentation ayant son extrémité de déchargement disposée sensiblement au centre du conteneur d'alimentation.

5. Appareil suivant l'une quelconque des revendications 1 à 4, dans lequel les réceptacles (7) ont chacun une paroi (19) d'extrémité arrière et une paire de parois latérales opposées (20) partant de cette paroi arrière, la goulotte tubulaire associée (3, 3a) de sortie étant partiellement entourée par cette paroi d'extrémité arrière et ces parois latérales.

6. Appareil suivant l'une quelconque des revendications précédentes, dans lequel le conteneur (1') d'alimentation est doté d'une limite intérieure inférieure dont la partie centrale est en saillie vers le haut par rapport à la partie sensiblement horizontale se prolongeant radialement depuis cette partie centrale.

7. Appareil suivant l'une quelconque des revendications 1 à 5, dans lequel le conteneur (1'') d'alimentation est doté d'une limite intérieure inférieure présentant une concavité dans sa partie centrale et dont la partie sensiblement horizontale se prolonge radialement depuis cette partie centrale.

# Fig. 1

## (A)

## (B)

# Fig. 2

## (A)

## (B)

# Fig. 4

# Fig. 5

## Fig. 3

### (A)

### (B)

## Fig. 6

### (A)

### (B)